# EUROPEAN PATENT SPECIFICATION

(11) **EP 4 234 939 B1**
(45) Date of publication and mention of the grant of the patent: **08.04.2026**
(21) Application number: 23156609.2
(22) Date of filing: 14.02.2023
(51) Int. Cl.: F04D 25/02, F04D 19/00, F04D 25/06, F04D 25/08, E21F 1/00

(54) **DEVICE FOR SUPPLYING POWER TO JET FAN DISPOSED IN TUNNEL AND JET FAN SYSTEM USING THE SAME**
VORRICHTUNG ZUR STROMVERSORGUNG EINES IN EINEM TUNNEL ANGEORDNETEN STRAHLGEBLÄSES UND STRAHLGEBLÄSESYSTEM DAMIT
DISPOSITIF D'ALIMENTATION EN ÉNERGIE D'UN VENTILATEUR À JET DISPOSÉ DANS UN TUNNEL ET SYSTÈME DE VENTILATEUR À JET L'UTILISANT

(30) Priority: 25.02.2022 KR 20220025359
(43) Date of publication of application: 30.08.2023
(73) Proprietor: Korea Expressway Corp., Gyeongsangbuk-do, 39660 Republic of Korea (KR)
(72) Inventor: KIM, Nam Goo, 13588 Gyeonggi-do (KR); JO, Jong Wook, 16910 Gyeonggi-do (KR); LEE, Shin Guk, 42286 Daegu (KR)
(74) Representative: De Lorenzo, Danilo

(56) References cited:
- EP-A1- 2 456 003
- WO-A1-2007/110874
- CN-A- 106 948 854
- CN-B- 101 196 169
- CN-U- 202 991 095
- KR-A- 20110 037 042
- KR-A- 20140 064 097
- KR-B1- 101 037 256
- KR-B1- 101 539 893
- US-A1- 2010 225 282
- US-A1- 2012 132 411

## Description

### BACKGROUND OF THE INVENTION

### Field of the Invention

The present disclosure relates to a device for independently supplying power to a jet fan disposed in a tunnel using a secondary battery and a jet fan system using the same.

### Description of the Related Art

In a general tunnel, only an inlet and an outlet are open, and thus a natural circulation phenomenon in which air inside the tunnel is replaced with outside air more rarely occurs as a length of the tunnel increases.

Accordingly, in order to ensure breathing and visibility of drivers and passers-by against polluted air such as exhaust gas, dust, and moisture generated from various automobiles or railroad vehicles running inside the tunnel, air needs to be artificially discharged to the outside of the tunnel through a separate ventilation system.

In particular, when a fire occurs due to a traffic accident such as a collision or crash between vehicles inside the tunnel, in order to protect people inside the tunnel from high-temperature flames and smoke and to ensure an escape route, an exhaust system that introduces fresh air from the outside and rapidly discharges flames and smoke inside the tunnel is essentially installed so that the exhaust system may be used in combination with the above-described ventilation system.

Until now, a method of forcibly circulating the air inside the tunnel with the outside air by installing a jet fan on a ceiling surface inside the tunnel having an arch or rectangular structure has mainly been used.

In the conventional art, power of the jet fan has been supplied using a remote power supply facility. Specifically, a switchgear panel in a tunnel management station has converted high-voltage power of a transmission tower into low-voltage power by using a transformer and supplied the power to the jet fan, which inevitably results in a huge cost of constructing power supply infrastructure and using the transformer.

Accordingly, there is a need for a system for supplying power to a jet fan more effectively and economically, and furthermore, there is a need for a method of charging a battery using natural wind generated naturally in a tunnel.

Document KR 2011 0037042 A discloses a jet fan system according to the preamble of claim 1.

### SUMMARY OF THE INVENTION

Therefore, the present invention as defined in claim 1 has been made in view of the above problems, and it is an object of the present invention to provide a jet fan device supporting a mode in which self-generation is performed using natural wind naturally generated in a tunnel and a mode in which a jet fan is driven by a motor (dual mode).
The jet fan system includes a jet fan device disposed in a tunnel, and a power supply device configured to supply power to the jet fan device.

The jet fan device includes a jet fan, a self-power generation module configured to generate power using rotational force of the jet fan by natural wind generated in the tunnel, a double-axis motor having a first shaft connected to the jet fan to drive the jet fan, and a magnetic coupling including a front end connected to a second shaft of the double-axis motor and a rear end connectable to the self-power generation module through magnetism, and the magnetic coupling is driven in a driving mode or a self-power generation mode based on rotational strength of the jet fan.

The power supply device includes a secondary battery configured to provide power to the jet fan device, a battery management system (BMS) configured to monitor charging and discharging states of the secondary battery, and a first inverter configured to invert DC power of the secondary battery into AC power and supply the inverted power to the double-axis motor of the jet fan device, and the jet fan device is driven according to discharge of the secondary battery in the driving mode.

The self-power generation module may include a power generation unit configured to self-generate power using the natural wind, a converter configured to convert AC power generated by the power generation unit into DC power, a storage battery configured to store the converted DC power, and a second inverter configured to invert DC power of the storage battery into AC power, and the AC power inverted by the second inverter may be provided to the power supply device through an on-board charger (OBC) module.

The magnetic coupling operates in the self-power generation mode when the rotational strength of the jet fan is less than or equal to first rotational strength, and operates in the driving mode when the rotational strength of the jet fan is greater than or equal to second rotational strength.

The jet fan device may be disposed in a predetermined housing, and the housing may include a movement route for an operator to maintain the jet fan device.

The secondary battery may be configured to provide power for driving a jet fan disposed inside a tunnel at a predetermined speed for a predetermined time, and the jet fan may be automatically driven according to discharge of the secondary battery.

A voltage of 380 V or 440 V may be applied to a motor of the jet fan.

The secondary battery and the first inverter may be disposed inside a heat radiation structure to prevent contamination or malfunction due to dust or vehicle exhaust gas generated inside the tunnel, the heat radiation structure may be fixed to an inner wall of the tunnel or exposed to outside air, and the secondary battery may include a module for heat retention and a heating module to prevent drive loss.

The secondary battery may supply power to the BMS as regular power, and an auxiliary battery for supplying emergency power to the BMS may be included.

An operation module for triggering discharge of the secondary battery may be disposed inside the tunnel, and the operation module may be operated by a user.

The power supply device may further include one or more smoke detection sensors inside the tunnel, and the operation module may be activated exclusively when smoke of a predetermined value or more is detected through the smoke detection sensor.

A plurality of smoke detection sensors may be included and disposed in front of and behind the jet fan in a vehicle moving direction, and exhaust of the jet fan may be automatically set to be directed toward a smoke detection sensor in which smoke of the predetermined value or more is detected first.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a diagram for schematically describing a jet fan system disposed inside a tunnel according to an embodiment of the present invention;
FIG. 2 is a diagram for specifically describing a jet fan device according to an embodiment of the present invention;
FIG. 3 is a block diagram illustrating a configuration of the jet fan device according to an embodiment of the present invention;
FIG. 4 is a diagram for describing an operational flow of the jet fan system according to an embodiment of the present invention;
FIG. 5 is a diagram for describing an arrangement and configuration of a power supply device according to an embodiment of the present invention;
FIG. 6 is a diagram for describing a power supply device disposed on a side wall of a tunnel ;
FIG. 7 is a diagram for describing a method of operating the power supply device in case of emergency ;
FIG. 8 is a diagram for describing the jet fan system for driving one or more jet fans in case of emergency ; and
FIG. 9 illustrates a method of operating the power supply device

### DETAILED DESCRIPTION OF THE INVENTION

Various embodiments disclosed in this disclosure will be described with reference to the drawings.

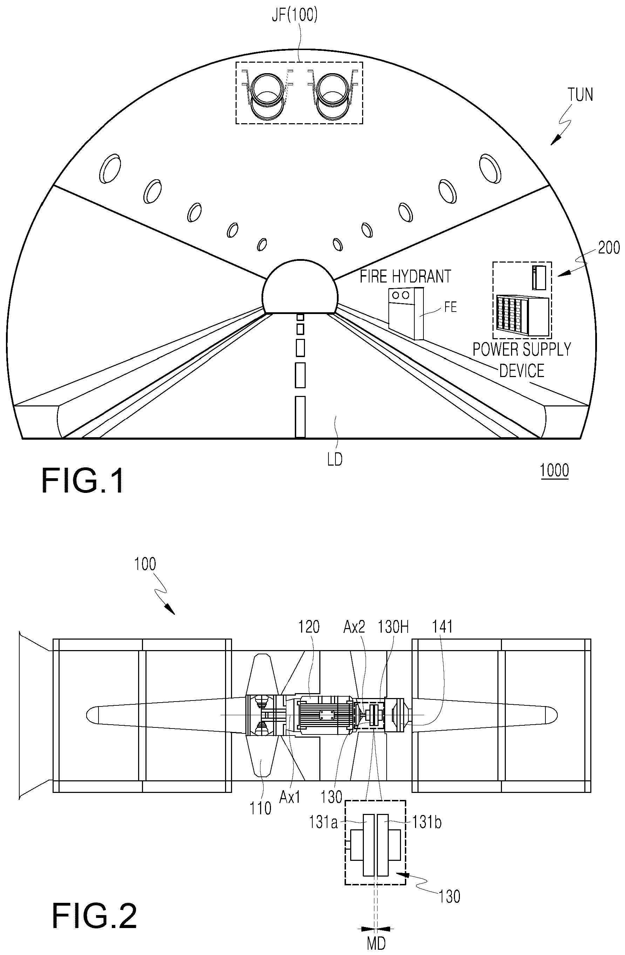

FIG. 1 is a diagram for schematically describing a jet fan system 1000 disposed inside a tunnel TUN according to an embodiment of the present invention.

The jet fan system 1000 includes a jet fan device JF 100 having a jet fan and a power supply device 200 for supplying power to the jet fan device JF 100.

The jet fan device JF 100 is operated in a dual mode. A first mode (driving mode) is a mode in which power of a motor is used for driving, and a second mode (self-power generation mode) is a self-generating mode in which rotational force of the jet fan is generated by wind (including traffic wind) naturally generated inside the tunnel TUN, and self-generation is performed by the generated rotational force.

Jet fan devices JF 100 may be disposed on an upper wall of the tunnel and disposed at an interval of more than one hundred meters (for example, 160 meters). However, an arrangement and arrangement interval of the jet fan devices JF 100 may vary according to embodiments.

The power supply device 200 supplies power to an electric motor (for example, a double-axis motor) for driving the jet fan of the jet fan device JF 100.

The power supply device 200 includes a self-power source for supplying power to the jet fan device JF 100, and the self-power source is implemented as a secondary battery.

In addition, a road LD and a plurality of lights illuminating the road LD may be disposed inside the tunnel TUN, and a fire hydrant FE may be disposed in preparation for a fire. As an optional or additional embodiment, an emergency evacuation route, an emergency parking lot, etc. may be disposed inside the tunnel TUN.

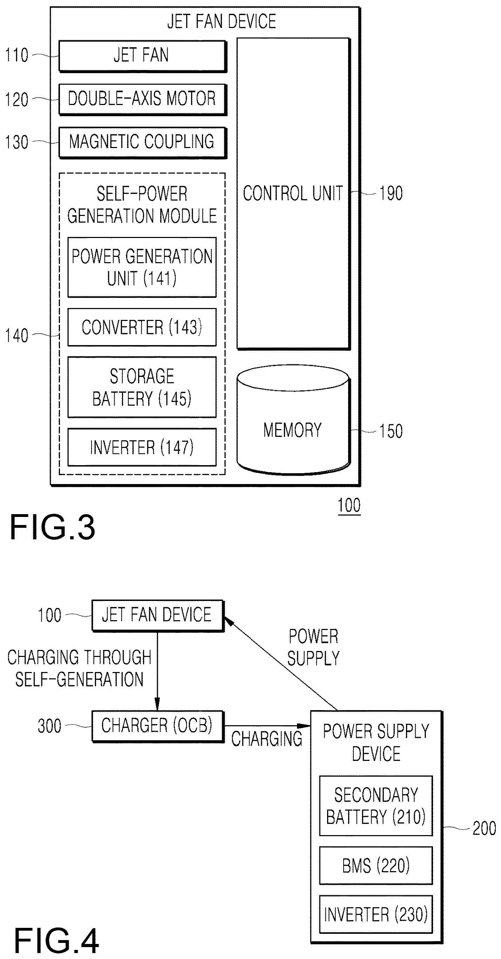

FIG. 2 is a diagram for specifically describing the jet fan device 100 according to an embodiment of the present invention, and FIG. 3 is a block diagram illustrating a configuration of the jet fan device 100 according to an embodiment of the present invention.

The jet fan device 100 is disposed inside the tunnel, and includes a jet fan 110, a double-axis motor 120, a magnetic coupling 130, a self-power generation module 140, a memory 150, a control unit 190, etc.

The jet fan 110 may include a plurality of blades, and is rotated by power of the double-axis motor 120 or is rotated by natural wind in the tunnel when power of the double-axis motor 120 is not supplied.

The double-axis motor 120 is a module that directly drives the jet fan 110, and receives power supplied from the power supply device 200. The double-axis motor 120 includes a first shaft Ax1 and a second shaft Ax2. Specifically, the double-axis motor 120 drives and rotates the jet fan 110 using the first shaft Ax1 coupled to the jet fan 110, and is used for self-generation using the magnetic coupling 130 coupled to the second shaft Ax2.

The magnetic coupling 130 has a configuration including a magnet, and includes a front end 131a connected to the second shaft Ax2 of the double-axis motor 120 and a rear end 131b connectable to a joint-type power generation unit 141 of the self-power generation module 140 through magnetism.

The magnetic coupling 130 is automatically converted into the driving mode or the self-power generation mode based on the rotational strength (speed) of the jet fan 110. Here, the driving mode is a mode in which the jet fan 110 is driven by the double-axis motor 120, and the self-power generation mode is a mode in which the jet fan 110 rotates by natural wind.

An interval MD between the front end 131a and the rear end 131b of the magnetic coupling 130 may be set to 3.5 mm. The corresponding interval MD may be a value suitable for switching between the driving mode and the self-power generation mode. In this case, it may be experimentally confirmed that a rotational speed of the jet fan 110 due to natural wind in the tunnel TUN is 3.4 m/s or more.

In the corresponding interval MD, a frequency may be measured as 6 Hz or more, a rate of rotation (r/min) may be measured as 18 or more, power generation may be measured as 0.3 W or more, a voltage may be measured as 3.3 V or more, and a current may be measured as 0.1 A or more. As the frequency increases, the rotational speed (and the rate of rotation, the amount of power generation, the voltage, the current, etc.) of the jet fan 110 may increase. When the frequency is 13 Hz, the rate of rotation may be measured as 108 r/min, the rotational speed may be measured as 6.8 m/s, the amount of power generation may be measured as 22 to 27 W, and the voltage may be measured as 26 V. However, the embodiment is not limited thereto.

The magnetic coupling 130 is driven in the self-power generation mode when the rotational strength of the jet fan 110 is equal to or less than first rotational strength, and is driven in the driving mode when the rotational strength of the jet fan 110 is equal to or greater than a second rotational strength.

In one example which is not according to the claimed invention, the first rotational strength and the second rotational strength may have the same value, and the corresponding value may be set to 10 m/s. However, the example is not limited thereto.

According to the invention, the first rotational strength and the second rotational strength have different values, and in this case, the second rotational strength is greater than the first rotational strength.

As an optional example which is not according to the claimed invention, the control unit 190 may detect that power is applied to the double-axis motor 120 to select the driving mode when the jet fan 110 is driven by the double-axis motor 120, and select the self-power generation mode when power of the double-axis motor 120 is not used (or when small power is used).

The control unit 190 separates the magnetic coupling 130 and the self-power generation module 140 from each other in the driving mode, and couples the magnetic coupling 130 and the self-power generation module 140 to each other in the self-power generation mode.

The self-power generation module 140 is configured to self-generate power using the rotational force of the jet fan 110 caused by natural wind generated in the tunnel, and may include the power generation unit 141, a converter 143, a storage battery 145, an inverter 147, etc.

The power generation unit 141 is a joint-type generator and is used for self-generation using natural wind, and the converter 143 may convert AC power generated by the power generation unit 141 into DC power. The storage battery 145 stores the converted DC power, and the inverter 147 may invert the DC power of the storage battery 145 into AC power.

The AC power inverted by the inverter 147 is provided to an on-board charger (OBC) module 300 of FIG. 4, and the OBC module may be used to charge a power source of the power supply unit 200. The charged power source (for example, secondary battery) of the power supply device 200 may be used again to drive the jet fan device 100, so that a virtuous cycle of energy may be generated.

The memory 150 may store various types of information under the control of the control unit 190, and the control unit 190 may be configured to control overall operation of the jet fan device 100.

The jet fan device 100 is disposed in a predetermined housing, and the housing may include a movement route for an operator to maintain the jet fan device (in particular, the magnetic coupling 130). The movement route may include a manhole. However, the embodiment is not limited thereto.

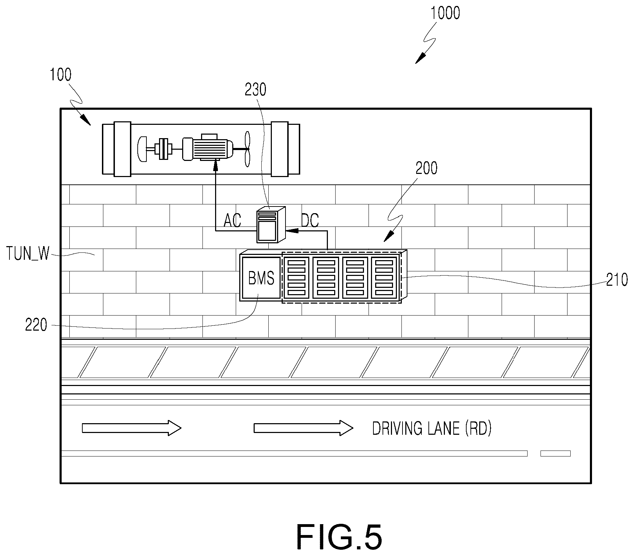

FIG. 4 is a diagram for specifically describing the jet fan system 1000 according to an embodiment of the present invention, and is a diagram for describing an operational flow of the jet fan system 1000, and FIG. 5 is a diagram for describing an arrangement and configuration of the power supply device 200 according to an embodiment of the present invention.

The jet fan device 100 may charge the OBC module (charger) 300 through self-generation, and the OBC module 300 may charge the secondary battery 210 of the power supply 200 with the power. As an optional embodiment, the secondary battery 210 may be charged through a mobile charger.

The power supply device 200 may be disposed on a sidewall TUN_W of the tunnel TUN, and may include a secondary battery 210, a battery management system (BMS) 220, and an inverter 230. The inverter 230 may have a configuration different from that of the inverter 147 of the jet fan device 100.

First, the secondary battery 210 is configured to supply power to the double-axis motor 120 of the jet fan, and may include a plurality of batteries. The plurality of batteries may include a main battery and an auxiliary battery. Here, active components of the secondary battery 210 include chemicals and electrolytes included in positive and negative electrode materials.

Here, a discharging or charging process may be performed on the secondary battery 210. During discharging, a positive electrode serves as a cathode and a negative electrode serves as an anode, and during charging, the positive electrode may act as an anode and the negative electrode may act as a cathode. The anode may be referred to as an oxidation electrode, and the cathode may be referred to as a reduction electrode.

The secondary battery 210 may provide predetermined power to the double-axis motor 120 of the jet fan. The double-axis motor 120 may include a three-phase induction motor that allows the jet fan 110 to comply with a predetermined discharge speed (for example, 30 m/s or more) and a predetermined voltage (540 Pa), and a voltage of 380 V or 440 V may be applied. However, the embodiment is not limited thereto. When a relatively high voltage is applied (440 V), the capacity of each of the secondary battery 210 and the inverter 230 may be optimized by lowering a required current value.

The secondary battery 210 may supply power for continuously driving the double-axis motor 120 of the jet fan 110 for one hour or more, and in an embodiment, a battery used in an electric bus may be used. As an optional and additional embodiment, the secondary battery 210 may be charged through a mobile charging vehicle or a dedicated secondary battery charger disposed in the tunnel. In addition, the secondary battery 210 may be charged through the self-power generation module 140 of the jet fan device 100 (through the OBC module).

In an embodiment, the dedicated secondary battery charger may be implemented as a mobile type for mass temporary charging after complete discharge, or may be implemented as a stationary type (for example, an OBC module).

In addition, the secondary battery 210 may include a module for heat radiation and/or heat retention (passive system) and a module for heating (active system) since a driving time (from fully charged state to fully discharged state) of the jet fan 110 decreases as an internal temperature of the secondary battery 210 decreases.

Accordingly, the secondary battery 210 may drive the module for heat retention and the module for heating when the internal temperature of the secondary battery 210 decreases to a predetermined level or less.

The BMS 220 monitors charging and discharging states of the secondary battery 210 and may control an operation of the secondary battery 210. The BMS 220 additionally includes a communication module, and may receive a remote-control command for driving the secondary battery 210 input from the outside and perform an operation corresponding thereto.

The inverter 230 inverts DC power generated by the secondary battery 210 into AC power and supplies the power to the double-axis motor 120 of the jet fan 110. In the conventional art, a transformer has been required to transform an ultra-high voltage of a transmission tower. However, by applying the secondary battery 210, power is supplied to the double-axis motor 120 of the jet fan 110 through the inverter 230.

In one embodiment, the secondary battery 210, the BMS 220, and the inverter 230 may be spaced apart from each other as separate components. In another embodiment, the secondary battery 210, the BMS 220, and the inverter 230 may be implemented as an integrated battery pack.

In addition, the jet fan 110 may be automatically driven according to discharge of the secondary battery 210. As described above, when power of the double-axis motor 120 is 440 V, a required current may be lower than that of the existing motor of 380 V, and thus the secondary battery 210 and the inverter 230 may be optimally designed.

In an embodiment, all or at least part of the secondary battery 210 and the inverter 230 may be disposed inside a heat radiation structure. The heat radiation structure may be disposed on a tunnel wall TUN_W. The heat radiation structure may be effective for heat radiation by being disposed on the tunnel wall TUN_W made of concrete. In an embodiment, the heat radiation structure may be disposed to be exposed to the outside air. In this case, the heat radiation structure may have an excellent heat radiation effect even when a separate cooling fan is not applied. Here, the heat radiation structure may satisfy standards for earthquake resistance and moisture resistance. For example, the heat radiation structure may be a structure that satisfies KSCIEC60529.

The heat radiation structure may prevent pollutants such as dust and vehicle exhaust gas generated inside the tunnel, or water and detergent due to water cleaning from entering the secondary battery 210 and/or the inverter 230. Accordingly, contamination inside the device may be prevented, and malfunction of the device may be prevented.

In addition, the heat radiation structure may be implemented to have a heat resistance function in preparation for a tunnel fire, and may be fixed to the inner wall of the tunnel in consideration of the weight of the secondary battery 210. The heat radiation structure may be disposed inside the tunnel in consideration of a tunnel environment and construct ability.

In an embodiment, the secondary battery 210 and the inverter 230 are configured to be exposed to the outside air, so that natural heat radiation may be performed without applying a separate cooling fan.

The BMS 220 may further include or electrically connect an auxiliary battery for driving the BMS 220.

Accordingly, power of the secondary battery 210 may not be used, which is effective for driving. In an embodiment, the BMS 220 may receive main power for regular power from a separate power source for control, and may receive auxiliary power from an auxiliary battery for emergency power.

Since driving power of the secondary battery 210 is about 800 V, it may be effective to use a separate power source (a constant power source for control and/or an auxiliary battery) without converting a voltage.

Meanwhile, the jet fan system 1000 may include a plurality of jet fans, a power supply device for supplying power to each of the jet fans, a plurality of smoke detection sensors, a controller, etc.

The jet fan system 1000 may control the plurality of jet fans, and the plurality of jet fans may be driven in a forward or reverse direction so that an exhaust direction of a fan may be set.

Each of the plurality of smoke detection sensors may be disposed in each of forward and backward directions of the jet fan to measure the amount of smoke caused by the fire.

The jet fan system 1000 may control a power supply system connected to the jet fan so that the exhaust of the jet fan is directed toward a smoke detection sensor in which smoke of a predetermined value or more is detected first.

The jet fan system 1000 may determine exhaust output directions of jet fans disposed at an entrance and an exit and a jet fan disposed away from the entrance and the exit in the tunnel.

For example, when smoke, the amount of which is equal to or greater than a predetermined value, is detected around the jet fan disposed at the entrance/exit, the jet fan system 1000 may determine an exhaust output direction of the jet fan to be a direction toward the outside of the tunnel from the entrance/exit.

In addition, the jet fan system 1000 may determine a point where there are many tunnel users in an image taken by a CCTV installed in the tunnel, and then drive the jet fan so that wind moves in an opposite direction with respect to the point in order to prevent smoke from being introduced to the point where there are many tunnel users.

In addition, the jet fan system 1000 or the power supply device 200 may have a program for constantly monitoring a battery status and stability (for example, the amount of charge, a voltage, an internal temperature, etc.). The program may be executed by a processor of the system.

In addition, the jet fan system 1000 may include an OS for integrated system control that minimizes starting load, maintains uniform discharge, and suppresses temperature rise of a major component.

In addition, the jet fan system 1000 or the power supply unit 200 may be linked to a tunnel remote integrated management system, and may include an automatic control function (power, communication, etc.) for ensuring reliability of remote and on-site control.

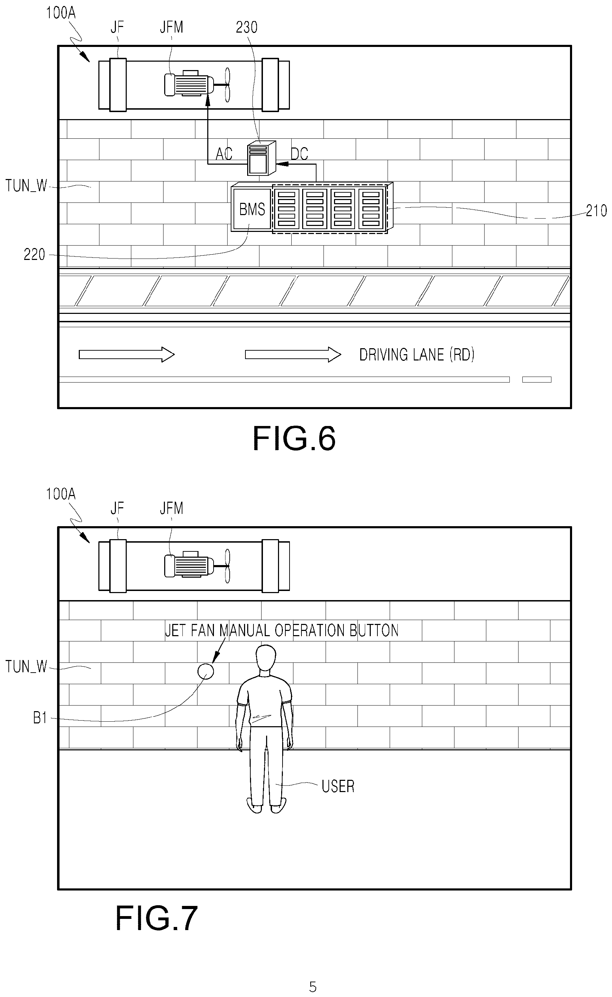

FIG. 6 is a diagram for describing a power supply device 200 disposed on the sidewall TUN_W of the tunnel TUN according to an embodiment which is not according to the claimed invention.

The power supply device 200 may include a secondary battery 210, a BMS 220, and an inverter 230, functions of which may be similar to those of FIG. 5.

First, the secondary battery 210 is configured to supply power to a motor JFM of a jet fan JF included in a jet fan device 100A, and may include a plurality of batteries. Active components of the secondary battery 210 include chemicals and electrolytes included in positive and negative electrode materials.

The secondary battery 210 may provide predetermined power to the motor JFM of the jet fan JF. The motor JFM may be a three-phase induction motor that allows the jet fan JF to comply with a predetermined discharge speed (for example, 30 m/s or more) and a predetermined voltage (540 Pa), and a voltage of 380 V or 440 V may be applied. When a relatively high voltage is applied (440 V), the capacity of each of the secondary battery 210 and the inverter 230 may be optimized by lowering a required current value. A double-axis motor may be applied to the motor JFM. However, the embodiment is not limited thereto.

The secondary battery 210 may supply power for continuously driving the motor JFM of the jet fan JF for one hour or more, and in an embodiment, a battery used in an electric bus may be used. As an optional and additional embodiment, the secondary battery 210 may be charged through a mobile charging vehicle or a dedicated secondary battery charger disposed in the tunnel. In an embodiment, the dedicated secondary battery charger may be implemented as a mobile type for mass temporary charging after complete discharge.

In addition, a self-powered generator using traffic wind may be disposed in the tunnel, or an on-site charger may be disposed for the small amount of constant charging such as natural discharge or maintenance operation. Accordingly, optimal charging in consideration of maintenance may be performed.

The BMS 220 may monitor charging and discharging states of the secondary battery 210 and may control an operation of the secondary battery 210. The BMS 220 additionally includes a communication module, and may receive a remote-control command for driving the secondary battery 210 input from the outside and perform an operation corresponding thereto.

In an embodiment, when charge of the secondary battery 210 is less than a predetermined reference value, the BMS 220 may supply less power to the jet fan JF than when charge is greater than or equal to the predetermined reference value.

The BMS 220 may further include or electrically connect an auxiliary battery for driving the BMS 220. Accordingly, power of the secondary battery 210 may not be used, which is effective for driving. In an embodiment, the BMS 220 may receive main power for regular power from a separate power source for control, and may receive auxiliary power from an auxiliary battery for emergency power.

Since driving power of the secondary battery 210 is about 800 V, it may be effective to use a separate power source (a constant power source for control and/or an auxiliary battery) without converting a voltage.

FIG. 7 is a diagram for describing a method of operating the power supply device 200 in case of emergency.

Referring to FIG. 7, a user may operate a button B1 for manual operation of the jet fan capable of manually operating the jet fan JF of the jet fan device 100A in case of emergency (or when air circulation is required).

The button B1 is an operation module that triggers discharge of the secondary battery 210 of the power supply device 200, may be disposed on the tunnel wall TUN_W inside the tunnel TUN, and may be operated by the user USER.

In an embodiment, the button B1 may be activated and blinked only when the amount of charge of the secondary battery 210 is greater than or equal to a predetermined value.

The power supply device 200 may include one or more smoke detection sensors or may be connected thereto by wire or wirelessly. The power supply device 200 may cause the button B1 for triggering manual operation of the jet fan to be operated only in case of emergency. To this end, the power supply device 200 may discharge the secondary battery 210 only when smoke of a predetermined value or more is detected through the smoke detection sensor, which may be performed by the BMS 220.

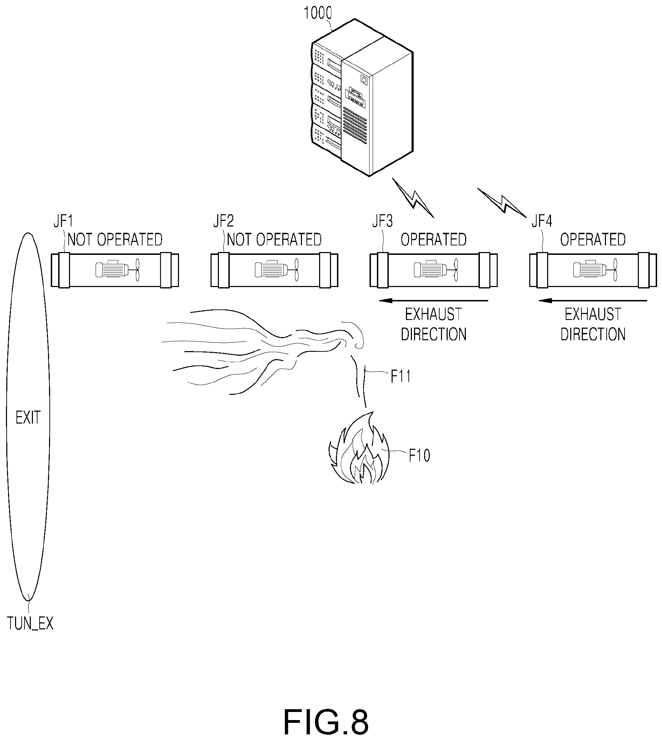

FIG. 8 is a diagram for describing the jet fan system 1000 for driving one or more jet fans in case of emergency.

The jet fan system 1000 may include a plurality of jet fans JF1 to JF4, a power supply device for supplying power to each of the jet fans JF1 to JF4, a plurality of smoke detection sensors, a controller, etc.

The jet fan system 1000 may control the plurality of jet fans JF1 to JF4, and the plurality of jet fans JF1 to JF4 may be driven in a forward or reverse direction to set an exhaust direction of the fan.

Each of the plurality of smoke detection sensors may be disposed in each of forward and backward directions of the jet fan to measure the amount of smoke caused by the fire.

The jet fan system 1000 may control a power supply system connected to the jet fan so that the exhaust of the jet fan is directed toward a smoke detection sensor in which smoke of a predetermined value or more is detected first.

The controller may determine exhaust output directions of jet fans disposed at the entrance and the exit and a jet fan disposed away from the entrance and the exit in the tunnel.

For example, when smoke, the amount of which is equal to or greater than a predetermined value, is detected around the jet fan disposed at the entrance/exit, the controller may determine an exhaust output direction of the jet fan in an entrance/exit direction.

In addition, the jet fan system 1000 may determine a point where there are many tunnel users in an image taken by a CCTV installed in the tunnel, and then drive the jet fan so that wind moves in an opposite direction with respect to the point in order to prevent smoke from being introduced to the point where there are many tunnel users.

The controller of the jet fan system 1000 may set an escape direction of an emergency exit on the tunnel wall to be opposite to the exhaust output direction of the jet fan. However, the jet fan system 1000 may set an escape direction of an emergency exit disposed at a predetermined distance from the exit or entrance of the tunnel to a direction toward a nearby exit or entrance.

At this time, the controller of the jet fan system 1000 may output the escape direction as a guide message through a speaker, etc.

Each of the jet fans included in the jet fan system 1000 may receive power using the above-described power supply device.

When smoke of a predetermined value or more is detected through the smoke detection sensor, the controller may drive a predetermined number of jet fans to change a direction of the smoke.

When a fire F10 occurs near an exit TUN_EX, the controller may drive predetermined jet fans JF3 and JF4 to direct smoke toward the exit TUN _EX. At this time, the controller may not drive jet fans JF1 and JF2 immediately adjacent to the exit or may operate the jet fans in a direction toward the exit TUN_EX. In this case, disasters caused by smoke may be prevented more effectively.

The controller may include an operating system (OS) for driving a predetermined number of jet fans, and may drive an individual jet fan at a predetermined speed for a predetermined time by adjusting a frequency of AC power inverted by the inverter. In particular, the controller may increase a driving time of the individual jet fan.

In addition, the controller may increase the total driving time of the jet fan by adjusting the frequency of the AC power inverted by the inverter according to a rate of decrease of DC output voltage at an initial stage of discharge of the secondary battery.

In an embodiment, each power supply device may include a separate module for adjusting the frequency of the AC power of the inverter, or a BMS or an inverter may be implemented to perform the corresponding function.

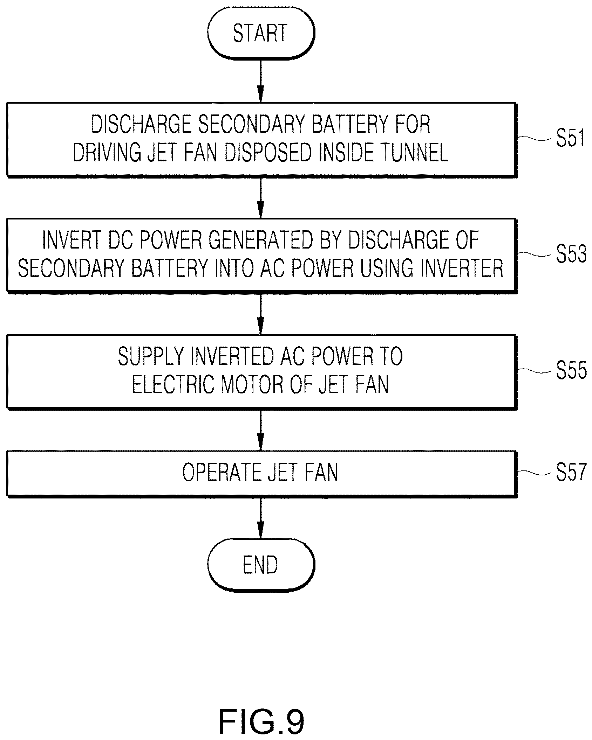

FIG. 9 illustrates a method of operating the power supply device

First, the power supply device may discharge the secondary battery for driving the jet fan disposed inside the tunnel (S51).

Specifically, the power supply device discharges a secondary battery that provides power for driving the jet fan disposed inside the tunnel at a predetermined speed for a predetermined time. Here, the predetermined time may be one hour, and may vary depending on the embodiment. The predetermined speed may be the discharge speed of the fan of 30 m/s or more, and may be implemented differently depending on the embodiment.

Next, the power supply device may invert DC power generated by discharge of the secondary battery into AC power using the inverter (S53).

Thereafter, the power supply device may supply the inverted AC power to the electric motor of the jet fan to drive the jet fan (S55). Finally, the jet fan may be operated by the electric motor (S57).

With regard to the power supply device, the operation module that triggers discharge of the secondary battery may be disposed in the tunnel, so that the user may operate the operation module.

Meanwhile, a method of driving the jet fan system for controlling one or more jet fans disposed inside the tunnel may include a step of driving a predetermined number of jet fans for changing a direction of smoke when smoke of a predetermined value or more is detected through the smoke detection sensor, and a step of providing a guide message for evacuating the user located in the tunnel by sound.

At this time, each jet fan is supplied with power by a corresponding power supply device, and the power supply device may include a secondary battery that provides power for driving the jet fan at a predetermined speed for a predetermined time, a BMS that monitors charging and discharging states of the secondary battery, and an inverter that inverts DC power of the secondary battery into AC power and supplies the power to the electric motor of the jet fan. According to discharge of the secondary battery, the jet fan may be automatically driven.

In addition, the jet fan system or the power supply device may have a program for constantly monitoring a battery status and stability (for example, the amount of charge, a voltage, an internal temperature, etc.). The program may be executed by a processor of the system.

In addition, the jet fan system may include an OS for integrated system control that minimizes starting load, maintains uniform discharge, and suppresses temperature rise of a major component.

In addition, the jet fan system or the power supply unit may be linked to a tunnel remote integrated management system, and may include an automatic control function (power, communication, etc.) for ensuring reliability of remote and on-site control.

By providing the jet fan system according to an embodiment of the present invention, power may be provided to the jet fan using the secondary battery without relying on remote power supply, so that construction is simple and maintenance costs may be greatly reduced.

By providing the jet fan system according to an embodiment of the present invention, self-generation may be performed using wind naturally generated in the tunnel, and power generated by self-generation may be used to charge the secondary battery, so that power efficiency may be improved, and device efficiency may be improved.

Meanwhile, this specification is not intended to limit the present invention to the specific terms presented. Therefore, although the present invention has been described in detail with reference to the above examples, those skilled in the art may make alterations, changes, and modifications to the present examples without departing from the scope of the present invention. The scope of the present invention is indicated by the claims to be described later rather than the detailed description above.

## Claims

1. A jet fan system comprising:
a jet fan device (100) configured to be disposed in a tunnel; and
a power supply device (200) configured to supply power to the jet fan device (100), wherein:
the jet fan device (100) comprises:
a jet fan (110);
a self-power generation module (140) configured to generate power using rotational force of the jet fan (110) by natural wind generated in the tunnel; and
a double-axis motor (120) having a first shaft (Ax1) connected to the jet fan to drive the jet fan;
**characterised in that**
the jet fan device (100) further comprises a magnetic coupling (130) including a front end (131a) connected to a second shaft (Ax2) of the double-axis motor (120) and a rear end (131b) connected to the self-power generation module (140) through magnetism,
**in that** the magnetic coupling (130) is configured to be driven in a driving mode for operating the jet fan by the double-axis motor or a self-power generation mode of the self-power generation module based on rotational speed of the jet fan,
**in that** the power supply device (200) comprises:
a secondary battery (210) configured to provide power to the jet fan device (100);
a battery management system (BMS, 220) configured to monitor charging and discharging states of the secondary battery (210); and
a first inverter (230) configured to invert DC power of the secondary battery (210) into AC power and supply the inverted power to the double-axis motor of the jet fan device,
**in that** the jet fan device (100) is driven according tc discharge of the secondary battery (210) in the driving mode,
and **in that** the magnetic coupling (130) is automatically converted into the driving mode or the self-power generation mode, wherein the magnetic coupling operates in the self-power generation mode when the rotational speed of the jet fan (110) is less than first rotational speed, and operates in the driving mode when the rotational speed of the jet fan (110) is greater than second rotational speed, wherein the second rotational speed is greater than the first rotational speed.

2. The jet fan system according to claim 1, wherein:
the self-power generation module (140) comprises:
a power generation unit (141) configured to self-generate power using the natural wind;
a converter (143) configured to convert AC power generated by the power generation unit into DC power;
a storage battery configured to store the converted DC power; and
a second inverter configured to invert DC power of the storage battery into AC power, and
the AC power inverted by the second inverter is provided to the power supply device through an on-board charger (OBC) module.

3. The jet fan system according to claim 2, wherein the jet fan device (100) is disposed in a predetermined housing, and the housing includes a movement route for an operator to maintain the jet fan device (100).

4. The jet fan system according to claim 1, wherein the secondary battery (210) is configured to provide power for driving a jet fan (110) disposed inside a tunnel at a predetermined speed for a predetermined time; and
the jet fan (110) is configured to be automatically driven according tc the discharge of the secondary battery.

5. The jet fan system according to claim 4, wherein a voltage of 380 V or 440 V is applied to the motor of the jet fan (110).

6. The jet fan system according to claim 4, wherein:
the secondary battery (210) and the first inverter are disposed inside a heat radiation structure to prevent contamination or malfunction due to dust or vehicle exhaust gas generated inside the tunnel;
the heat radiation structure is configured to be fixed to an inner wall of the tunnel or exposed to outside air; and
the secondary battery (210) includes a module for heat retention and a heating module to prevent drive loss.

7. The jet fan system according to claim 4, wherein the secondary battery is configured to supply power to the battery management system (BMS) as regular power, and an auxiliary battery for supplying emergency power to the battery management system (BMS) is included.

8. The jet fan system according to claim 4, wherein an operation module for triggering discharge of the secondary battery (210) is configured to be disposed inside the tunnel, and the operation module is operable by a user.

9. The jet fan system according to claim 8, further comprising:
one or more smoke detection sensors configured to be disposed inside the tunnel,
wherein the operation module is activated exclusively when smoke of a predetermined value or more is detected through the smoke detection sensor.

10. The jet fan system according to claim 9, wherein:
a plurality of smoke detection sensors is included and disposed in front of and behind the jet fan in a vehicle moving direction; and
exhaust of the jet fan is automatically set to be directed toward a smoke detection sensor in which smoke of the predetermined value or more is detected first.

## Patentansprüche

1. Strahlgebläsesystem, umfassend:
eine Strahlgebläsevorrichtung, die dazu konfiguriert ist, in einem Tunnel angeordnet zu werden; und
eine Stromversorgungsvorrichtung (200), die dazu konfiguriert ist, die Strahlgebläsevorrichtung (100) mit Strom zu versorgen, wobei:
die Strahlgebläsevorrichtung (100) umfasst:
ein Strahlgebläse (110);
ein Selbststromerzeugungsmodul (140), das dazu konfiguriert ist, durch Verwenden der Drehkraft des Strahlgebläses (110) durch natürlichen Wind, der in dem Tunnel erzeugt wird, Strom zu erzeugen; und
einen Doppelachsenmotor (120) aufweisend eine erste Welle (Ax1), die mit dem Strahlgebläse verbunden ist, um das Strahlgebläse anzutreiben;
**dadurch gekennzeichnet, dass**
die Strahlgebläsevorrichtung (100) ferner umfasst:
eine magnetische Kupplung (130), die ein vorderes Ende (131a) umfasst, das mit einer zweiten Welle (Ax2) des Doppelachsenmotors (120) verbunden ist, und ein hinteres Ende (131b), das mit dem Selbststromerzeugungsmodul (140) durch Magnetismus verbunden ist, dadurch dass die magnetische Kupplung (130) dazu konfiguriert ist, in einem Antriebsmodus zum Betreiben das Strahlgebläse durch den Doppelachsenmotor oder in einem Selbststromerzeugungsmodus basierend auf die Drehgeschwindigkeit des Strahlgebläses angetrieben zu werden,
dadurch dass die Stromversorgungsvorrichtung (200) umfasst:
eine Sekundärbatterie (210), die dazu konfiguriert ist, der Strahlgebläsevorrichtung (100) Strom bereitzustellen;
ein Batteriemanagementsystem (BMS, 220), das dazu konfiguriert ist, der Lade- und Entladezustände der Sekundärbatterie (210) zu überwachen; und
einen ersten Wechselrichter (230), der dazu konfiguriert ist, Gleichstrom aus der Sekundärbatterie (210) in Wechselstrom umzukehren und den umgekehrten Strom dem Doppelachsenmotor der Strahlgebläsevorrichtung zu versorgen,
dadurch, dass die Strahlgebläsevorrichtung (100) gemäß der Entladung der Sekundärbatterie (210) in dem Antriebsmodus angetrieben wird,
und dadurch, dass die magnetische Kupplung (130) automatisch in den Antriebsmodus oder den Selbststromerzeugungsmodus umgeschaltet wird, wobei die magnetische Kupplung in dem Selbststromerzeugungsmodus arbeitet, wenn die Drehgeschwindigkeit des Strahlgebläses (110) kleiner als eine erste Drehgeschwindigkeit ist, und in dem Antriebsmodus arbeitet, wenn die Drehgeschwindigkeit des Strahlgebläses (110) größer als eine zweite Drehgeschwindigkeit ist, wobei die zweite Drehgeschwindigkeit größer als die erste Drehgeschwindigkeit ist.

2. Strahlgebläsesystem nach Anspruch 1, wobei: das Selbststromerzeugungsmodul (140) umfasst:
eine Stromerzeugungseinheit (141), die dazu konfiguriert ist, durch Verwenden des natürlichen Winds eigenständiger Strom zu erzeugen;
einen Umrichter (143), der dazu konfiguriert ist, den Wechselstrom, der durch die Stromerzeugungseinheit erzeugt wird, in Gleichstrom umzuwandeln;
eine Speicherbatterie, die dazu konfiguriert ist, den umgewandelten Gleichstrom zu speichern; und
einen zweiten Wechselrichter, der dazu konfiguriert ist, den Gleichstrom der Speicherbatterie in Wechselstrom umzukehren, und
der Wechselstrom, der durch den zweiten Wechselrichter umgekehrt wird, durch ein On-Board-Ladegerät-Modul (OBC) an die Stromversorgungsvorrichtung versorgt wird.

3. Strahlgebläsesystem nach Anspruch 2, wobei die Strahlgebläsevorrichtung (100) in einem vorbestimmten Gehäuse angeordnet ist, und das Gehäuse einen Bewegungsweg für einen Bediener umfasst, um die Strahlgebläsevorrichtung (100) zu warten.

4. Strahlgebläsesystem nach Anspruch 1, wobei die Sekundärbatterie (210) dazu konfiguriert ist, Strom bereitzustellen, um ein Strahlgebläse (110), das in einem Tunnel angeordnet ist, mit einer vorbestimmten Geschwindigkeit und für eine vorbestimmte Zeit anzutreiben; und das Strahlgebläse (110) dazu konfiguriert ist, gemäß der Entladung der Sekundärbatterie automatisch angetrieben zu werden.

5. Strahlgebläsesystem nach Anspruch 4, wobei eine Spannung von 380 V oder 440 V an den Motor des Strahlgebläses (110) angelegt wird.

6. Strahlgebläsesystem nach Anspruch 4, wobei: die Sekundärbatterie (210) und der erste Wechselrichter innerhalb einer Wärmestrahlungsstruktur angeordnet sind, um eine Kontamination oder Fehlfunktion durch Staub oder Fahrzeugabgase, die in dem Tunnel erzeugt werden, zu verhindern;
wobei die Wärmestrahlungsstruktur dazu konfiguriert ist, an einer Innenwand des Tunnels befestigt zu werden oder der Außenluft ausgesetzt zu werden; und
die Sekundärbatterie (210) ein Wärmespeichermodul und ein Heizmodul umfasst, um Antriebsverlust zu vermeiden.

7. Strahlgebläsesystem nach Anspruch 4, wobei die Sekundärbatterie dazu konfiguriert ist, Strom an das Batteriemanagementsystem (BMS) als regulärer Strom zu versorgen, und eine Hilfsbatterie zur Notstromversorgung an das Batteriemanagementsystem (BMS) enthalten ist.

8. Strahlgebläsesystem nach Anspruch 4, wobei ein Betriebsmodul zum Auslösen der Entladung der Sekundärbatterie dazu konfiguriert ist, innerhalb des Tunnels angeordnet zu werden, und das Betriebsmodul durch einen Benutzer betätigt werden kann.

9. Strahlgebläsesystem nach Anspruch 8, ferner umfassend:
eine oder mehrere Rauchmelder, die dazu konfiguriert sind, innerhalb des Tunnels angeordnet zu werden,
wobei das Betriebsmodul ausschließlich aktiviert wird, wenn der Rauch mit einem vorbestimmten Wert oder mehr durch den Rauchmelder erfasst wird.

10. Strahlgebläsesystem nach Anspruch 9, wobei:
eine Mehrzahl von Rauchmeldern enthalten ist und vor und hinter dem Strahlgebläse in Bewegungsrichtung eines Fahrzeugs angeordnet ist; und
die Entlüftung des Strahlgebläses automatisch eingestellt wird, um zu einem Rauchmelder gerichtet zu werden, in dem der Rauch mit dem vorbestimmten Wert oder mehr zuerst erfasst wurde.

## Revendications

1. Système de ventilateur à jet comprenant :
un dispositif de ventilateur à jet (100) configuré pour être disposé dans un tunnel;
et
un dispositif d'alimentation en énergie (200) configuré pour fournir de l'énergie au dispositif de ventilateur à jet (100), dans lequel :
le dispositif de ventilateur à jet (100) comprend :
un ventilateur à jet (110) ;
un module d'auto-génération d'énergie (140) configuré pour générer de l'énergie à l'aide de la force de rotation du ventilateur à jet (110) par le vent naturel généré dans le tunnel ; et
un moteur à double axe (120) ayant un premier arbre (Ax1) connecté au ventilateur à jet pour entraîner le ventilateur à jet;
**caractérisé en ce que**
le dispositif de ventilateur à jet (100) comprend en outre un accouplement magnétique (130) comprenant une extrémité avant (131a) connectée à un second arbre (Ax2) du moteur à double axe (120) et une extrémité arrière (131b) connectée au module d'auto-génération d'énergie (140) au moyen du magnétisme,
**en ce que**,
l'accouplement magnétique (130) est configuré pour être entraîné dans un mode de fonctionnement pour faire fonctionner le ventilateur à jet par le moteur à double axe ou dans un mode d'auto-génération d'énergie du module d'auto-génération d'énergie en fonction de la vitesse de rotation du ventilateur à jet,
**en ce que**
le dispositif d'alimentation en énergie (200) comprend :
une batterie secondaire (210) configurée pour fournir de l'énergie au dispositif de ventilateur à jet (100) ;
un système de gestion de batterie (BMS, 220) configuré pour surveiller les états de charge et de décharge de la batterie secondaire (210) ; et
un premier onduleur (230) configuré pour convertir l'énergie continue de la batterie secondaire (210) en énergie alternative et fournir l'énergie convertie au moteur à double axe du dispositif de ventilateur à jet,
**en ce que**
le dispositif de ventilateur à jet (100) est entraîné selon la décharge de la batterie secondaire (210) dans le mode de fonctionnement,
et **en ce que**
l'accouplement magnétique (130) est automatiquement converti dans le mode de fonctionnement ou le mode d'auto-génération d'énergie, dans lequel l'accouplement magnétique fonctionne en mode d'auto-génération d'énergie lorsque la vitesse de rotation du ventilateur à jet (110) est inférieure à une première vitesse de rotation, et fonctionne en mode de fonctionnement lorsque la vitesse de rotation du ventilateur à jet (110) est supérieure à une seconde vitesse de rotation, la seconde vitesse de rotation étant supérieure à la première vitesse de rotation.

2. Le système de ventilateur à jet selon la revendication 1, dans lequel :
le module d'auto-génération d'énergie (140) comprend :
une unité de génération d'énergie (141) configurée pour générer de l'énergie de manière autonome en utilisant le vent naturel ;
un convertisseur (143) configuré pour convertir l'énergie alternative générée par l'unité de génération d'énergie en énergie continue ;
une batterie de stockage configurée pour stocker l'énergie continue convertie ; et
un second onduleur configuré pour convertir l'énergie continue de la batterie de stockage en énergie alternative, et
l'énergie alternative convertie par le second onduleur est fournie au dispositif d'alimentation en énergie par un module de chargeur embarqué (OBC).

3. Le système de ventilateur à jet selon la revendication 2, dans lequel le dispositif de ventilateur à jet (100) est disposé dans un logement prédéterminé, et le logement comprend un trajet de déplacement pour qu'un opérateur puisse entretenir le dispositif de ventilateur à jet (100).

4. Le système de ventilateur à jet selon la revendication 1, dans lequel la batterie secondaire (210) est configurée pour fournir de l'énergie pour entraîner un ventilateur à jet (110) disposé à l'intérieur d'un tunnel à une vitesse prédéterminée pendant une durée prédéterminée, et
le ventilateur à jet est configuré pour être entraîné automatiquement selon la décharge de la batterie secondaire.

5. Le système de ventilateur à jet selon la revendication 4, dans lequel une
tension de 380 V ou 440 V est appliquée au moteur du ventilateur à jet (110).

6. Le système de ventilateur à jet selon la revendication 4, dans lequel :
la batterie secondaire (210) et le premier onduleur sont disposés à l'intérieur d'une structure de dissipation thermique pour éviter la contamination ou le dysfonctionnement dus à la poussière ou aux gaz d'échappement de véhicules générés à l'intérieur du tunnel ;
la structure de dissipation thermique est configurée pour être fixée à une paroi intérieure du tunnel ou exposée à l'air extérieur ; et
la batterie secondaire (210) comprend un module de rétention thermique et un module de chauffage pour éviter la perte d'entraînement.

7. Le système de ventilateur à jet selon la revendication 4, dans lequel la batterie secondaire est configurée pour fournir de l'énergie au système de gestion de batterie (BMS) comme énergie régulière, et une batterie auxiliaire pour fournir une alimentation de secours au système de gestion de batterie (BMS) est incluse.

8. Le système de ventilateur à jet selon la revendication 4, dans lequel un module de fonctionnement pour déclencher la décharge de la batterie secondaire (210) est configuré pour être disposé à l'intérieur du tunnel, et le module de fonctionnement est opérable par un utilisateur.

9. Le système de ventilateur à jet selon la revendication 8, comprenant en outre :
un ou plusieurs capteurs de détection de fumée est configuré pour être disposé à l'intérieur du tunnel,
dans lequel le module de fonctionnement est activé exclusivement lorsqu'une fumée d'une valeur prédéterminée ou plus est détectée par le capteur de détection de fumée.

10. Le système de ventilateur à jet selon la revendication 9, dans lequel :
une pluralité de capteurs de détection de fumée est incluse et disposée devant et derrière le ventilateur à jet dans une direction de déplacement de véhicule ; et
l'échappement du ventilateur à jet est automatiquement réglé pour être dirigé vers un capteur de détection de fumée dans lequel une fumée d'une valeur prédéterminée ou plus est détectée en premier.
